# EUROPÄISCHE PATENTANMELDUNG

(11) **EP 3 680 629 A1**
(43) Veröffentlichungstag der Anmeldung: **15.07.2020**
(21) Anmeldenummer: 19151674.9
(22) Anmeldetag: 14.01.2019
(51) Int. Cl.: G01F 1/66, G01F 15/14, G01F 15/00

(54) **ULTRASCHALL-DURCHFLUSSMENGENMESSER**

(71) Anmelder: Engelmann Sensor GmbH, 69168 Wiesloch-Baiertal (DE)
(72) Erfinder: Sturek, Robert, 69242 Mühlhausen (DE); Niedermayer, Manuel, 69231 Rauenberg (DE)
(74) Vertreter: Durm Patentanwälte PartG mbB

(57) **Zusammenfassung**

Ein Ultraschall-Durchflussmengenmesser hat ein Messrohr 10, das einen Messkanal 20 begrenzt. Zwei Ultraschallwandler 30, 30b senden und empfangen Ultraschall-Messsignale. Zwei schräge Umlenkspiegel 40a, 40b sitzen in einer muldenartigen Vertiefung 50 an der Innenwandung des Messrohrs 10. Ein dritter Umlenkspiegel 60 ist gegenüber, in der Mitte zwischen den Ultraschallwandlern 30a, 30b angeordnet. Die Ultraschallsignale zwischen den Ultraschallwandlern 30a, 30b legen einen W-förmigen Weg zurück. Das Messrohr 1 besteht aus einem Kunststoff, der Ultraschall gut absorbiert. Die Vertiefung 50 ist mit einem Füllmaterial 70 ausgefüllt, welches Ultraschall gut leitet. Dadurch ergibt sich ein konstanter Strömungsquerschnitt des Messkanals 20. Die Schallkennimpedanz des Füllmaterials 70 ist an die durch den Messkanal 20 strömende Flüssigkeit angepasst.

## Beschreibung

Die vorliegende Erfindung betrifft einen Ultraschall-Durchflussmengenmesser zur Bestimmung der Menge einer Flüssigkeit, die durch einen Messkanal fließt.

Solche Durchflussmengenmesser werden beispielsweise in Wärmezählern zur Bestimmung des Verbrauchs von Wärme in Heizungsanlagen verwendet. Dazu wird das Volumen des warmen Wassers, das durch den Messkanal strömt, gemessen. Gleichzeitig wird die Temperaturdifferenz zwischen zwei Messpunkten im Vorlauf und Rücklauf gemessen. Aus diesen beiden Messungen kann dann der Wärmezähler die verbrauchte Wärmemenge ermitteln.

Die Erfindung betrifft speziell Ultraschall-Durchflussmengenmesser mit zwei Ultraschallwandlern und drei Umlenkspiegeln, welche so angeordnet sind, dass die Ultraschallsignale zwischen den beiden Ultraschallwandlern einen im Prinzip W-förmigen Weg zurücklegen. Ein solcher Ultraschall-Durchflussmengenmesser ist beispielsweise durch die von der Anmelderin stammende EP 3 199 923 A1 bekannt. Dieser Durchflussmengenmesser hat einen Messkanal, der von einem im Wesentlichen zylindrischen Kunststoffformteil ausgebildet ist, das in einem Gehäuse aus Metall sitzt. Das Kunststoffformteil weist eine Innenwandung auf, welche die Umlenkspiegel aufnimmt.

Kunststoff hat im Gegensatz zu Metall die Eigenschaft, Ultraschallwellen kaum zu reflektieren, stattdessen aufzunehmen und gut zu absorbieren. So werden unerwünschte Reflexionen an den Wänden des metallischen Gehäuses und eine unkontrollierte Ausbreitung eingekoppelter Schwingungen als Körperschall minimiert. Dadurch erhöht sich die Genauigkeit der Ultraschall-Messung.

Bei einem Ultraschall-Durchflussmengenmesser mit W-förmigem Signalweg gemäß EP 3 199 923 A1 müssen die beiden ersten Umlenkspiegel, die gegenüber den Ultraschallwandlern angeordnet sind, in einem schrägen Winkel zueinander ausgerichtet sein, damit sie die von den Ultraschallwandlern empfangenen Signale zu dem dritten Umlenkspiegel, der in der Mitte zwischen den Ultraschallwandlern angeordnet ist, reflektieren können. Um nun die Strömung durch den Messkanal möglichst wenig zu stören, kann man die Umlenkspiegel in einer muldenartigen Vertiefung an der Innenwandung des Messrohrs anordnen. Der Nachteil ist, dass es zu einer erheblichen Erweiterung des Strömungsquerschnitts nach dem ersten schrägen Umlenkspiegel und anschließend zu einer spiegelbildlichen Querschnittsverengung im Bereich des zweiten schrägen Umlenkspiegels kommt. Insbesondere im Bereich der unteren Kanten der Umlenkspiegel kann es zu signifikanten Störungen der Strömung und zur Ablagerung von Schmutzpartikeln in den Bereichen verringerter Strömungsgeschwindigkeit kommen.

Für eine möglichst exakte Messung der Durchflussmenge mittels Ultraschall sollte der Querschnitt des Messkanals idealerweise konstant sein. Das der Erfindung zugrundeliegende technische Problem besteht also darin, einen Ultraschall-Durchflussmengenmesser mit W-förmigem Signalweg so auszugestalten, dass störende Querschnittserweiterungen oder Querschnittsverengungen im Bereich des Messkanals möglichst vermieden werden.

Bei der Lösung dieser Aufgabe wird ausgegangen von einem Ultraschall-Durchflussmengenmesser gemäß dem Oberbegriff des ersten Patentanspruchs. Gelöst wird die Aufgabe gemäß dem kennzeichnenden Teil des Anspruchs dadurch, dass die muldenartigen Vertiefungen, in denen die zwei schräg angeordneten Umlenkspiegel sitzen, mit einem Ultraschall gut leitenden Füllmaterial ausgefüllt sind, in welchem diese Umlenkspiegel eingebettet sind.

Vorzugsweise sind die Umlenkspiegel vollständig in das Füllmaterial eingebettet und hat der Messkanal über seine gesamte Länge einen annähernd konstanten Strömungsquerschnitt. Auf jeden Fall lassen sich sprunghafte, die Strömung störende Querschnittsänderungen vermeiden.

Im Gegensatz zu dem den Messkanal begrenzenden Messrohr, das aus einem Ultraschall gut absorbierenden Kunststoff besteht, leitet das Füllmaterial den auftreffenden Ultraschall weitgehend reflexionsfrei weiter auf die in dem Füllmaterial eingebetteten Umlenkspiegel. Umgekehrt werden die von den Umlenkspiegeln reflektierten Ultraschallsignale durch das Füllmaterial nur wenig gedämpft.

Der dritte Umlenkspiegel, der in der Mitte zwischen den Ultraschallwandlern angeordnet sein muss, kann flächenbündig in die parallele Wandung des Messrohrs eingelassen werden und/oder relativ dünn sein, sodass er keine merkliche Verringerung des Strömungsquerschnitts verursacht.

Die beiden anderen Umlenkspiegel können entweder je in einer eigenen Vertiefung sitzen, welche dann mit dem Ultraschall gut leitenden Füllmaterial ausgefüllt ist, oder alternativ auch an den Enden einer gemeinsamen flachen Vertiefung sitzen, welche dann mit Füllmaterial ausgefüllt ist. In beiden Fällen müssen die Vertiefungen so bemessen sein, dass die Ultraschallsignale nicht auf benachbarte Abschnitte der Wandung des Messrohrs treffen, sondern ungehindert von den schrägen Umlenkspiegeln empfangen bzw. reflektiert werden können.

Die Umlenkspiegel bestehen in üblicher Weise aus Metall und haben eine polierte Oberfläche, ähnlich einem optischen Spiegel. Sie reflektieren die auftreffenden Ultraschallwellen nach dem Reflexionsgesetz, wonach der Ausfallwinkel identisch mit dem Einfallswinkel ist und beide mit der Normalen in der Einfallsebene liegen. Voraussetzung ist, dass die Wellenlänge der Ultraschallsignale erheblich größer ist als der Abstand zwischen Vorderseite und Rückseite der Metallplatte.

An Grenzflächen werden Ultraschallwellen verändert. Die Grenzfläche wird dabei durch die aneinandergrenzenden Schichten gebildet, im Falle der Umlenkspiegel also durch die Grenzfläche zwischen der Metalloberfläche und der Flüssigkeit, die durch den Messkanal fließt. Grundsätzlich wird eine Schallwelle an einer solchen Grenzfläche teilweise reflektiert und teilweise in die Nachbarschicht übertragen, also transmittiert. Voraussetzung für Reflexion ist, dass die beiden benachbarten Schichten unterschiedliche Schallkennimpedanzen aufweisen, wobei nicht der Absolutbetrag, sondern die Differenz der Schallkennimpedanzen entscheidend ist. Die nahezu totale Reflexion durch die Umlenkspiegel hat ihren Grund also in den stark unterschiedlichen Schallkennimpedanzen zwischen der Flüssigkeit und dem Metall der Spiegel, wobei an der polierten Oberfläche auch fast keine Streuung erfolgt.

Die Ultraschallwandler sitzen üblicherweise in runden Ausnehmungen des Messrohrs. In vorteilhafter und zweckmäßiger Weiterbildung der Erfindung sind auch diese Ausnehmungen im Bereich vor den Ultraschallwandlern mit Ultraschall gut leitendem Füllmaterial, vorzugsweise demselben Füllmaterial, ausgefüllt, sodass sich eine flächenbündige geschlossene Innenwandung des Messrohrs ergibt.Erfindungsgemäß sind die Vertiefung bzw. die Vertiefungen, in denen die zweiten Umlenkspiegel sitzen und/oder die Ausnehmungen, in denen die Ultraschallwandler sitzen, mit einem Füllmaterial ausgefüllt, welches Ultraschall gut leitet, d. h. also die transmittierten Schallwellen kaum absorbiert.

Gemäß einer bevorzugten Ausführungsform des erfindungsgemäßen Ultraschall-Durchflussmessers ist die Schallkennimpedanz des Füllmaterials an die durch den Messkanal strömende Flüssigkeit angepasst. Die Impedanzanpassung führt dazu, dass an der Grenzfläche zwischen dem Füllmaterial und der strömenden Flüssigkeit keine oder nur sehr geringe Reflexion stattfindet, vielmehr die Schallwellen in das Füllmaterial transmittiert werden. Aufgrund der guten Leitfähigkeit für Ultraschallwellen gelangen die Ultraschallsignale nahezu ungestört zu den Umlenkspiegeln, wo sie dann total reflektiert werden infolge der stark unterschiedlichen Schallkennimpedanzen zwischen dem Füllmaterial und dem Material (in der Regel Metall), aus dem die Spiegel bestehen.

Vorzugsweise entspricht die Schallkennimpedanz des Füllmaterials ungefähr der Schallkennimpedanz der durch den Messkanal strömenden Flüssigkeit. Handelt es sich bei dieser Flüssigkeit, wie in Heizungsanlagen üblich, um Wasser, so hat sich ein Füllmaterial aus einem hochpolymeren Kunststoff als besonders gut geeignet erwiesen. Je nach Temperatur beträgt die Schallkennimpedanz von Wasser ungefähr 1,5 10⁶ Ns/m³. Die Schallkennimpedanz von Naturgummi liegt beispielsweise etwa bei 1,4, die von Polystyrol bei etwas über 2. Die Schallkennimpedanzen von Messing oder Stahl liegen dagegen um ein Vielfaches höher, nämlich über 40.

Im Folgenden werden Ausführungsbeispiele der Erfindung unter Bezugnahme auf die beigefügten Abbildungen beschrieben. Es zeigen:
- Fig. 1: einen ersten Ultraschall-Durchflussmengenmesser, in einem vereinfachten Längsschnitt;
- Fig. 2: einen zweiten Ultraschall-Durchflussmengenmesser, in einem Längsschnitt.

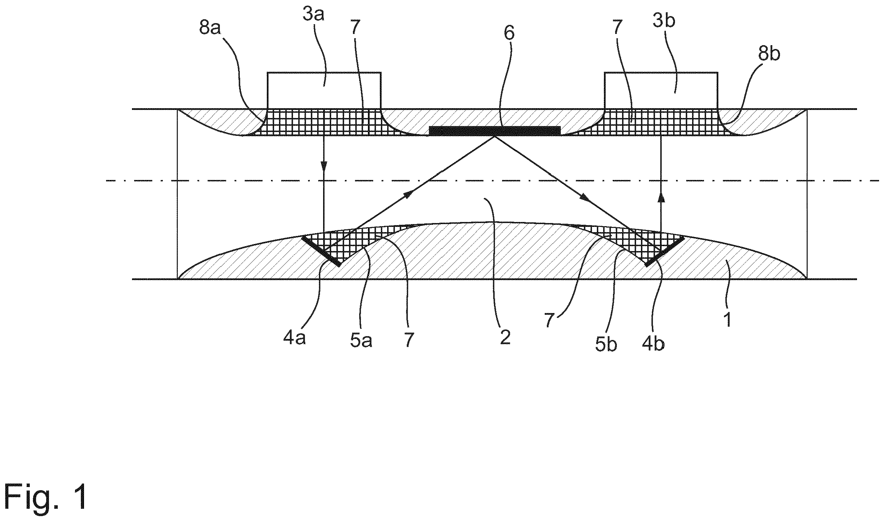

Die stark vereinfachte Darstellung von Fig. 1 zeigt einen relativ kleinen Durchflussmengenmesser für die Wärmemengenmessung in Heizungsanlagen von Gebäuden. Das Messrohr 1 wird also von kaltem oder warmem Heizungswasser durchströmt. Das Messrohr 1 begrenzt einen Messkanal 2 mit vorgegebenem Strömungsquerschnitt. Entlang des Messkanals 2 sind zwei Ultraschallwandler 3a und 3b mit einigem Abstand hintereinander angeordnet. Diese Ultraschallwandler 3a, 3b können Ultraschallsignale sowohl aussenden als auch empfangen. Die Ultraschallsignale werden quer zur Achse des Messkanals 2 in das vorbeifließende Wasser hineingesendet.

Gegenüber den Ultraschallwandlern 3a, 3b sind Umlenkspiegel 4a bzw. 4b an der Innenwandung des Messrohrs 1 angeordnet, und zwar derart, dass die Spiegelflächen schräg zueinander weisen. Diese Umlenkspiegel 4a, 4b sitzen jeweils in einer muldenartigen oder taschenartigen Vertiefung 5a bzw. 5b, welche an der Innenwandung des Messrohrs 1 ausgebildet sind. Ein dritter Umlenkspiegel 6 ist an der den schrägen Umlenkspiegeln 4a, 4b gegenüberliegenden Seite des Messrohrs 1 angeordnet, in der Mitte zwischen den Ultraschallwandlern 3a, 3b. Die Spiegelfläche des dritten mittigen Umlenkspiegels 6 verläuft parallel zur Innenwandung des Messrohrs 1 und damit auch parallel zur Achse des Messkanals 2.

Die von dem ersten Ultraschallwandler 3a ausgesendeten Ultraschall-Messsignale treffen zuerst auf den ersten Umlenkspiegel 4a und werden von diesem in einem schrägen Winkel gegenüber der Achse des Messkanals 2 zu dem mittigen Umlenkspiegel 6 gespiegelt. Dieser reflektiert das Messsignal und leitet es zu dem zweiten schrägen Umlenkspiegel 4b weiter. Schließlich wird das Messsignal senkrecht zur Achse des Messkanals 2 nach oben reflektiert, um von dem zweiten Ultraschallwandler 3b empfangen zu werden. Das von dem zweiten Ultraschallwandler 3b ausgesandte Messsignal nimmt den umgekehrten Weg und wird von dem ersten Ultraschallwandler 3a empfangen. Auf diese Weise legen die Ultraschallsignale zwischen den Ultraschallwandlern 4a, 4b einen im Prinzip W-förmigen Weg zurück.

Die drei Umlenkspiegel 4a, 4b und 6 sind flache ebene Platten aus Metall (z. B. Edelstahl), deren Oberfläche poliert sind und die Spiegelflächen bilden. Der mittige Umlenkspiegel 6 ist versenkt in der Wandung des Messrohrs 1 angeordnet, sodass er flächenbündig zur Wandung des Messrohrs 1 liegt und somit die Durchströmung des Messkanals 2 überhaupt nicht stört.

Die Vertiefungen 5a, 5b, in denen die schrägen Umlenkspiegel 4a, 4b sitzen, würden erhebliche Erweiterungen des Strömungsquerschnitts darstellen, welche die Strömung stören würde. Um dies zu vermeiden, sind die Vertiefungen 5a, 5b mit einem Füllmaterial 7 ausgefüllt oder aufgefüllt, wobei dieses Füllmaterial 7 - im Gegensatz zu dem absorbierenden Material des Messrohrs 1 - Ultraschallwellen gut leitet. Die Ultraschall-Messsignale durchdringen das Füllmaterial 7 weitestgehend ungehindert und werden deshalb erst an den Oberflächen der schrägen Umlenkspiegel 4a, 4b reflektiert. Gleichzeitig schließt das Füllmaterial 7 die Vertiefungen 5a, 5b bündig ab, sodass im Bereich der Vertiefungen 5a, 5b keine Erweiterung des Strömungsquerschnitts des Messkanals 2 auftritt, welche die Flüssigkeitsströmung stören könnte.

Vorzugsweise sind die beiden schrägen Umlenkspiegel 4a, 4b vollständig in dem Füllmaterial 7 eingebettet und hat der Messkanal 2 über seine gesamte Länge einen annähernd konstanten Strömungsquerschnitt. Es ist allerdings auch möglich, dass der Messkanal 2 mit einer leichten kontinuierlichen Querschnittserweiterung, zum Beispiel in Richtung des Ausgangs des Messrohrs 1, ausgebildet ist. Die Verfüllung der Vertiefungen 5a, 5b mit dem Ultraschall leitenden Füllmaterial 7 lässt auf jeden Fall eine optimale Gestaltung des Querschnittsprofils des Messkanals 2 bzw. des Messrohrs 1 zu.

Die Ultraschallwandler 3a, 3b sitzen nach oben versetzt in runden Ausnehmungen des Messrohrs 1, sodass sie nicht ganz bündig mit der Innenwandung des Messrohrs 1 enden. Aus diesem Grunde sind die Ausnehmungen 8a, 8b, in denen die Ultraschallwandler 3a, 3b sitzen, mit demselben Füllmaterial 7 gefüllt, sodass sich Flächenbündigkeit zu den benachbarten Abschnitten der Innenwandung des Messrohrs 1 ergibt.

Die Ultraschallwandler 3a, 3b nach oben versetzt in runden Ausnehmungen des Messrohrs 1, sodass sie nicht ganz bündig mit der Innenwandung des Messrohrs 1 enden. Aus diesem Grunde sind die Ausnehmungen 8a, 8b, in denen die Ultraschallwandler 3a, 3b sitzen, mit demselben Füllmaterial 7 gefüllt, sodass sich Flächenbündigkeit zu den benachbarten Abschnitten der Innenwandung des Messrohrs 1 ergibt.

Um unerwünschte Reflexionen der senkrecht oder schräg auf die Grenzflächen zwischen dem strömenden Wasser und dem Füllmaterial 7 auftreffenden Ultraschallwellen zu verhindern oder zumindest auf ein nicht störendes Maß zu reduzieren, ist die Schallkennimpedanz des Füllmaterials 7 an die Schallkennimpedanz der strömenden Flüssigkeit (Wasser) angepasst. Vorzugsweise sind die Schallkennimpedanzen beider Medien ungefähr gleich. Hier besteht das Füllmaterial 7 aus einem hochpolymeren Kunststoff (z. B. PMMA, Polymethylmethacrylat), dessen Schallkennimpedanz ungefähr der von Wasser entspricht.

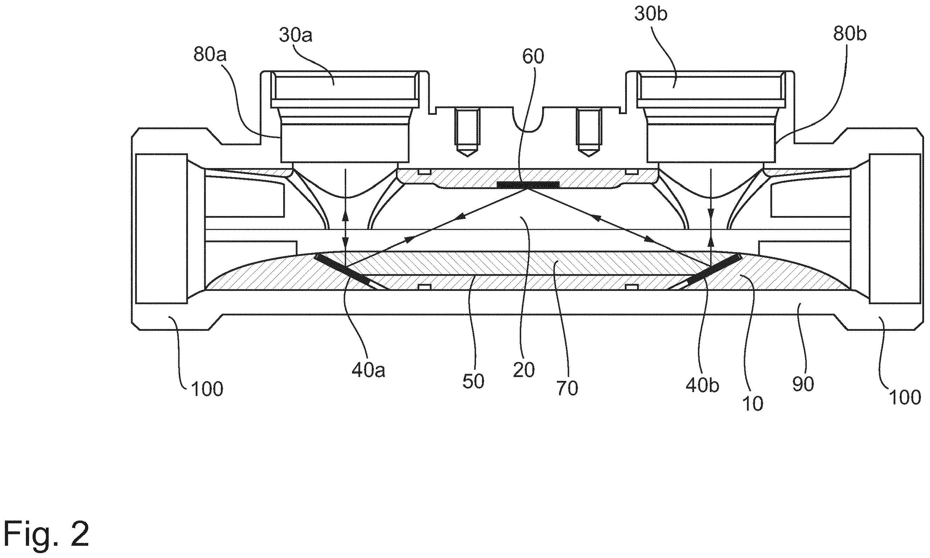

Die in Fig. 2 dargestellte zweite Ausführungsform eines Ultraschall-Durchflussmengenmessers entspricht im Prinzip dem vorstehend beschriebenen Ausführungsbeispiel.

Das Messrohr 10 begrenzt einen Messkanal 20, durch den Heizungswasser fließt. Die von zwei Ultraschallwandlern 30a, 30b gesendeten bzw. empfangenen Ultraschall-Messsignale werden durch zwei schräge Umlenkspiegel 40a, 40b und einen mittigen Umlenkspiegel 60 so reflektiert, dass die Ultraschallsignale zwischen den Ultraschallwandlern 30a, 30b einen im Prinzip W-förmigen Weg zurücklegen.

Anders als bei der Ausführung von Fig. 2 sitzen die schrägen Umlenkspiegel 40a, 40b nicht jeweils in einer eigenen Vertiefung, sondern jeweils an den Enden einer gemeinsamen flachen Vertiefung 50, welche sich somit fast über die gesamte axiale Länge des Messkanals 20 erstreckt. Diese zentrale Vertiefung 50 ist vollständig mit einem Ultraschall gut leitenden Füllmaterial 70 ausgefüllt, in welchem die Umlenkspiegel 40a, 40b vollständig eingebettet sind.

Die Ultraschallwandler 30a, 30b sitzen in runden Aussparungen 80a, 80b des Messrohrs 10. Um die plane Abstrahlfläche der Ultraschallwandler 30a, 30b an die kreisförmig gekrümmte Innenwandung des Messrohrs 10 anzupassen, kann optional auch der Bereich der Ausnehmungen 80a, 80b vor den Ultraschallwandlern 30a, 30b mit Ultraschall gut leitendem Füllmaterial (nicht dargestellt) ausgefüllt sein. Auf diese Weise kann auch im Bereich der Ultraschallwandler 30a, 30b bzw. der Ausnehmungen 80a, 80b eine Querschnittsänderung des Messkanals 20 vermieden werden.

Das Messrohr 10, das aus einem Ultraschall gut absorbierenden Kunststoff besteht, ist in ein Gehäuse 90 aus Metall (z. B. Messing) eingesetzt. Das Messrohr 1 ist als herausnehmbarer Einsatz ausgebildet. Das Gehäuse 90 hat runden Querschnitt und besitzt an seinen beiden Enden jeweils einen Flansch 100 zum Anschluss an das Rohrleitungsnetz.

### Bezugszeichen

| | Fig. 1 | Fig. 2 |
|---|---|---|
| Messrohr | 1 | 10 |
| Messkanal | 2 | 20 |
| Ultraschallwandler | 3a, 3b | 30a, 30b |
| (schräge) Umlenkspiegel | 4a, 4b | 40a, 40b |
| Vertiefung | 5a, 5b | 50 |
| (mittiger) Umlenkspiegel | 6 | 60 |
| Füllmaterial | 7 | 70 |
| Ausnehmungen | 8a, 8b | 80 |
| Gehäuse | | 90 |
| Flansch | | 100 |

## Patentansprüche

1. Ultraschall-Durchflussmengenmesser zur Bestimmung der Menge einer Flüssigkeit, die durch einen Messkanal fließt, mit
einem Messrohr (1, 10), das den Strömungsquerschnitt des Messkanals (2, 20) begrenzt und aus einem Ultraschall gut absorbierenden Kunststoff besteht,
zwei Ultraschallwandlern (3a, 3b; 30a, 30b), die mit Abstand hintereinander entlang des Messkanals angeordnet sind und Ultraschallsignale quer zur Achse des Messkanals in das Messrohr senden und/oder empfangen,
zwei Umlenkspiegeln (4a, 4b; 40a, 40b), die jeweils gegenüber den Ultraschallwandlern in einer muldenartigen Vertiefung (5a, 5b; 50) an der Innenwandung des Messrohrs sitzen und zueinander schräg geneigt angeordnet sind,
einem dritten Umlenkspiegel (6, 60), der in der Mitte zwischen den Ultraschallwandlern parallel zur Innenwandung des Messrohrs so angeordnet ist, dass die Ultraschallsignale zwischen den beiden Ultraschallwandlern einen im Prinzip W-förmigen Weg zurücklegen,
**dadurch gekennzeichnet,**
**dass** die Vertiefung (5a, 5b; 50) mit einem Ultraschall gut leitenden Füllmaterial (7, 70) ausgefüllt ist, in welchem die schräg angeordneten Umlenkspiegel (4a, 4b; 40a, 40b) eingebettet sind.

2. Ultraschall-Durchflussmengenmesser nach Anspruch 1, **dadurch gekennzeichnet, dass** die schrägen Umlenkspiegel (4a, 4b; 40a, 40b) vollständig in dem Füllmaterial (7, 70) eingebettet sind.

3. Ultraschall-Durchflussmengenmesser nach einem der vorhergehenden Ansprüche, **dadurch gekennzeichnet, dass** der Messkanal (2, 20) über seine gesamte Länge einen annähernd konstanten Strömungsquerschnitt hat

4. Ultraschall-Durchflussmengenmesser nach einem der vorhergehenden Ansprüche, **dadurch gekennzeichnet, dass** jeder der beiden schrägen Umlenkspiegel (4a, 4b) in einer eigenen Vertiefung (5a, 5b) sitzt, welche jeweils mit einem Ultraschall gut leitenden Füllmaterial (7) ausgefüllt ist.

5. Ultraschall-Durchflussmengenmesser nach einem der Ansprüche 1 bis 3, **dadurch gekennzeichnet, dass** die beiden schrägen Umlenkspiegel (40a, 40b) an den Enden einer gemeinsamen Vertiefung (50) sitzen, welche mit einem Ultraschall gut leitenden Füllmaterial (70) ausgefüllt ist.

6. Ultraschall-Durchflussmengenmesser nach einem der vorhergehenden Ansprüche, **dadurch gekennzeichnet, dass** die Ultraschallwandler(3a, 3b) in Ausnehmungen des Messrohrs (1) sitzen und diese Ausnehmungen mit einem Ultraschall gut leitendem Füllmaterial (7) ausgefüllt sind, sodass sich Flächenbündigkeit zu den benachbarten Abschnitten der Innenwandung des Messrohrs (1) ergibt.

7. Ultraschall-Durchflussmengenmesser nach einem der vorhergehenden Ansprüche, **dadurch gekennzeichnet, dass** die Schallkennimpedanz des Füllmaterials (7, 70) an die durch den Messkanal (2, 20) strömende Flüssigkeit angepasst ist.

8. Ultraschall-Durchflussmengenmesser nach einem der vorhergehenden Ansprüche, **dadurch gekennzeichnet, dass** die Schallkennimpedanz des Füllmaterials (7, 70) ungefähr der Schallkennimpedanz der durch den Messkanal (2, 20) strömenden Flüssigkeit entspricht.

9. Ultraschall-Durchflussmengenmesser nach einem der vorhergehenden Ansprüche, **dadurch gekennzeichnet, dass** die durch den Messkanal (2, 20) fließende Flüssigkeit Wasser ist und das Füllmaterial (7, 70) aus einem hochpolymeren Kunststoff besteht.
